# EUROPEAN PATENT APPLICATION

(11) **EP 1 797 760 A1**
(43) Date of publication of application: **20.06.2007**
(21) Application number: 05776716.2
(22) Date of filing: 30.08.2005
(51) Int. Cl.: A21D 6/00, A21D 2/38, A21D 13/00

(54) **METHOD OF CONTROLLING RISING RATIO OF BREAD BY CONTROLLING MILLING EXTENT OF CEREAL GRAINS**

(30) Priority: 08.09.2004 JP 2004261415
(71) Applicant: Sapporo Breweries Limited, Tokyo 150-8522 (JP)
(72) Inventor: Kihara, Makoto c/o Sapporo Breweries Limited, Nitta-Gun, Gunma 3700393 (JP); Yamashita, Shinji c/o Sapporo Breweries Limited, Nitta-Gun, Gunma 3700393 (JP); Kashiwada, Syuusaku c/o Sapporo Breweries Limited, Nitta-Gun, Gunma 3700393 (JP); Ito, Kazutoshi c/o Sapporo Breweries Limited, Nitta-Machi, Nitta-gun, Gunma 3700393 (JP)
(74) Representative: Billington, Lawrence Emlyn
(86) International application number: PCT/JP2005/015795
(87) International publication number: WO 2006/027975

(57) **Abstract**

A method is disclosed to regulate a swelling rate of bread by which materials obtained by adjusting a crush degree of seed of the cereal are used for a part of the bread.

## Description

### BACKGROUND OF THE INVENTION

### 1. Field of the Invention

This invention generally relates to bread for which it is possible to set the softness or a soft feeling appropriately by regulating a swelling rate of the bread appropriately and the manufacturing method of the same.

### 2. Description of the Related Art

Conventionally, as one of the characteristics that a consumer needs for bread, there is a feeling of the softness when eating bread. Actually, at least products aimed for such a characteristic are sold in the market. On the other hand, considering healthy intentions of consumers, in the field of bread, breads which use the cereal like unpolished rice, germinated unpolished rice, rye including lots of functional ingredients which are said to be good for health as material other than wheat are sold, but these breads have rather a feeling of hardness when being eaten and also have high concentration, compared to bread which uses wheat having a soft feeling. Also, a feeling when being eaten is different depending on manufacturing companies even for the same kind of bread (like a loaf of bread, hard roll bread such as Parisian). On the other hand, for consumers, it is common to select bread for the preference of each person rather than selecting bread by a single evaluation such as that bread has a soft feeling. Therefore, breads which have different feelings of softness are produced for the same kind of bread and are sold; thus, it is possible to cope with a wide variety of tastes for consumers. Also, it is expected to develop bread that can cope with a wide variety of consumer tastes without largely changing the manufacturing method and manufacturing facilities.

### SUMMARY OF THE INVENTION

Accordingly, it is a general object of the present invention to provide a method to regulate a swelling rate of bread by adjusting a crush degree of seeds of the cereal and bread which is manufactured by the method that substantially obviate one or more problems caused by the limitations and disadvantages of the related art. The method is such that bread can be adjusted for appropriate softness or a soft feeling. In more detail, materials obtained by adjusting a crush degree of seeds of the cereal and processed seeds of the cereal are used as a part of raw materials of bread, the swelling rate of bread can be regulated appropriately, and the swelling rate is regulated so as to have an appropriate feeling for eating depending on the demand of consumers.

As a result of the inventor of the present invention having examined zealously the above object, it is found that the above object can be achieved by adjusting the crush degree of the cereal and using it as a part of the material of bread. Thereby, the present invention, that is, a bread having an appropriate swelling characteristic was completed.

In order to achieve the above-mentioned object, there is provided according to one aspect of the present invention, a method to regulate a swelling rate of bread by which materials obtained by adjusting a crush degree of a seed of the cereal are used for a part of the bread.

According to an embodiment of the present invention, the swelling rate of bread can be regulated appropriately by adjusting the crush degree of the used seed of the cereal.

Additionally, in the method according to an embodiment of the present invention, barley seed is the material as the seed of the cereal.

According to an embodiment of the present invention, the swelling rate of bread can be regulated appropriately by using the barley seed in the materials.

In order to achieve the above-mentioned object, there is also provided according to another aspect of the present invention, a method to regulate a swelling rate of bread by which materials obtained by adjusting a crush degree of processed seed of the cereal are used for a part of the bread.

According to an embodiment of the present invention, the swelling rate of bread can be regulated appropriately by adjusting the crush degree of the used processed seed of the cereal.

Additionally, in the method according to an embodiment of the present invention, the processed seed of the cereal are such that the seed of the cereal are soaked in water or hot water for a predetermined time.

According to an embodiment of the present invention, the swelling rate of bread can be regulated appropriately by using the seed of the cereal which are soaked in water or hot water for a predetermined time.

Additionally, in the method according to an embodiment of the present invention, the processed seed of the cereal are such that the seed of the cereal are soaked in water or hot water for a predetermined time, and after that, a germination process is performed depending on a germination day.

According to an aspect of the present invention, the swelling rate of bread can be regulated appropriately by using the seed of the cereal which are soaked in water or hot water for a predetermined time, and after that, a germination process is performed.

Additionally, in the method according to an embodiment of the present invention, the processed seed of the cereal are such that the seed of the cereal are soaked in water or hot water for a predetermined time, and after that, a drying process is performed for a predetermined time.

According to an aspect of the present invention, the swelling rate of bread can be regulated appropriately by using the seed of the cereal which are soaked in water or hot water for a predetermined time, and after that, a drying process is performed for a predetermined time.

In order to achieve the above-mentioned object, there is also provided according to another aspect of the present invention, a method to regulate a swelling rate of bread by which materials obtained by adjusting a crush degree of processed seed of barley are used for a part of the bread.

According to an aspect of the present invention, the swelling rate of bread can be regulated appropriately by adjusting the crush degree of the used processed seed of barley.

Additionally, in the method according to an embodiment of the present invention, the processed seed of barley are such that barley seed are soaked in water or hot water for a predetermined time.

According to an aspect of the present invention, the swelling rate of bread can be regulated appropriately by using the barley seed which are soaked in water or hot water for a predetermined time.

Additionally, in the method according to an embodiment of the present invention, the processed seed of barley are such that the barley seed are soaked in water or hot water for a predetermined time, and after that, the germination process is performed.

According to an aspect of the present invention, the swelling rate of bread can be regulated appropriately by using the barley seed which are soaked in water or hot water for a predetermined time, and after that, a germination process is performed.

Additionally, in the method according to an embodiment of the present invention, the processed seed of barley are such that the barley seed are soaked in water or hot water for a predetermined time, and after that, the drying process is performed for a predetermined time.

According to an aspect of the present invention, the swelling rate of bread can be regulated appropriately by using the barley seed which are soaked in water or hot water for a predetermined time, and after that, a drying process is performed for a predetermined time.

In order to achieve the above-mentioned object, there is also provided according to another aspect of the present invention a bread or breads using seed of the cereal, processed seed of the cereal or processed seed of barley as a part of materials manufactured by any one of the above methods.

According to an aspect of the present invention, bread of the cereal, which cereal includes functional ingredients like GABA, and also has an appropriate swelling characteristic can be provided.

An effect of the present invention is to provide bread, in which a crush degree of seeds of the cereal and processed seeds of the cereal are regulated. Then by blending the seeds into bread, there is bread having appropriate swelling characteristics. An effect is also to provide a manufacturing method of the same. In addition, especially for barley seed and processed seed of barley, a bread in which a feeling for eating can be adjusted to a consumer' s feeling appropriately and is enriched with functional ingredients such as GABA can be provided.

### BRIEF DESCRIPTION OF THE DRAWINGS

Other objects, features and advantages of the present invention will become more apparent from the following detailed description when read in conjunction with the accompanying drawings, in which:
Fig. 1 is a figure showing breads having 40% of a mixed ratio of each fraction of seed of barley (cv.Gairdner);
Fig. 2 is a figure showing breads having 40% of a mixed ratio of each fraction of germinated barley (cv.Harrington) seed with a soaking process; and
Fig. 3 is a figure showing breads having 40% of a mixed ratio of each fraction of germinated barley (cv.Ichibanboshi) seed with a germination process.

### DESCRIPTION OF THE PREFERRED EMBODIMENTS

A description will now be given, with reference to the embodiments according to the present invention.

The present inventor has studied where the crush degree of the grain seed or the processed seed of grain is regulated, then breads including them as a part of materials are manufactured, and the swelling characteristic is examined. As the result, since swelling rates of breads which are originated from materials of different crush degrees are different, it is clear that manufacturing bread having appropriate swelling is possible according to the below example.

Barley flour having different crush degrees is manufactured using barley seeds as seeds. In this case, first of all, the seeds are crushed roughly by a crusher and only fractions between 1 mm and 2 mm are collected, then the obtained fractions were crushed in a cyclone-mill again. After that, fractions having different diameters were collected by a screening process, and the collection was mixed in materials of bread.

Also, a processed seed of the cereal is any one selected from a group comprising a processed seed, in which a seed of the cereal is processed with a soaking process for a predetermined time in water or hot water; a processed seed, in which a seed of the cereal is processed with the soaking process for the predetermined time in water or hot water, then the seed of the cereal is germinated with a germination process depending on a germination time; and a processed seed, in which a seed of the cereal is soaked in water or hot water for the predetermined time, then a drying process or a roast-dry process is performed.

In the present invention, germinated seed as the processed seed of one or more of wheat, barley, oats and rye is used as the processed seed of the cereal. Fractions having different diameters are collected using the same method described above, and the collection is mixed with materials of bread.

Barley seed or germinated barley seed have an appropriate swelling characteristic and also breads which are rich in functional ingredients like GABA can be obtained.

As the result of manufacturing breads mixed with fractions having different crush degrees, it is recognized that a crush degree affects greatly the swelling characteristic of breads. That is, it is recognized when a specific fraction is used, swelling of breads is increased. Also, it is recognized when the medium fraction is used, swelling of breads is restricted. Therefore, seed of the cereal having an adjusted crush degree are mixed with a part of materials of breads; thereby it is possible to regulate a swelling rate of breads during a manufacturing process of breads, and it is also possible to manufacture breads having appropriate characteristics like soft type breads having high swelling rates or hard type breads having low swelling rates.

### EXAMPLES

In the below, concrete examples that were performed according to the method of an embodiment of the present invention will be explained in more detail; however the present invention is not limited to these examples.

### Example 1

Barley flour having different crush degrees was manufactured by using seed of Gairdner which is a barley cultivar. First of all, barley seed was powdered roughly with a crusher, then only fractions having a diameter between 1 mm and 2 mm were collected; further, the obtained fractions were powdered again using a cyclone mill. Barley flour (less than 75 *µ*m, 75 *µ*m or above and less than 150 *µ*m, 150 *µ*m or above and less than 300 *µ*m, 300 *µ*m or above and less than 600 *µ*m, 600 *µ*m or above and less than 1 mm, 1 mm or above and less than 2 mm) were manufactured by a filtering process, then each fraction was mixed with materials for breads.

Breads were manufactured by using a loaf bread course of the Home Bakery (TWINBIRD) and materials were mixed in amounts as recommended by the Home Bakery, but breads were manufactured by mixing each fraction of barley flour to enriched flour with 20% and 40% of a mixed ratio, respectively.

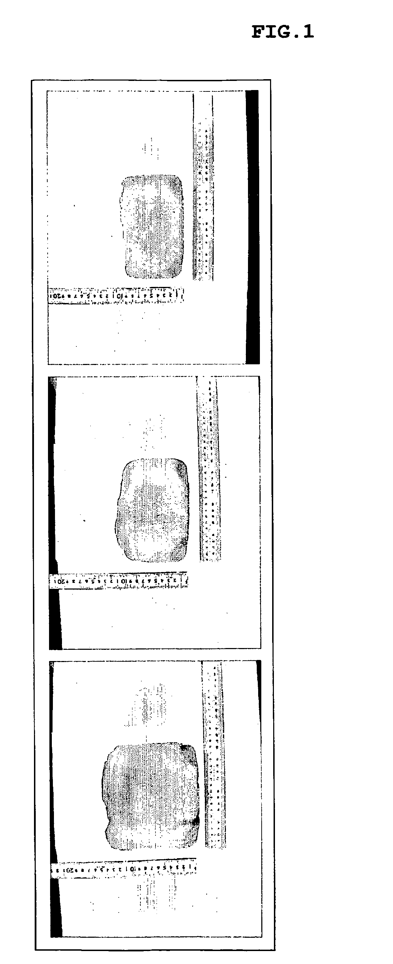

As a result, there is no significant difference for a swelling of breads of 20% of the mixed ratio, but there is a difference for swelling of breads of 40% of the mixed ratio (see Fig.1 and table 1). It is recognized that there is a tendency to increase the swelling rate as being more powdered for the 40% mixed ratio.

Table 1 shows an evaluation (cv.Gairdner barley flour) of a swelling rate of breads for each fraction in the case of 40% of the mixed ratio.

**Table 1**

| | LESS THAN 75 µm | 75 µm-150 µm | 150 µm-300 µm | 300 µm-600 µm | 600 µm-1mm | 1mm-2mm |
|---|---|---|---|---|---|---|
| 40% MIXED RATIO | 5 | 4 | 3 | 3 | 2 | 1 |

The swelling rate of breads is evaluated as 5 grades, and the swelling rate is higher as its value is increased.

Fig. 1 is a figure showing breads which are mixed with 40% of each fraction of seeds of barley (cv.Gairdner). In Fig. 1, the left one is a part of the mixed barley of less than 75 *µ*m, the middle one shows the mixed barley which has 150 *µ*m or above and less than 300 *µ*m, and the right one shows the mixed barley which has 1 mm or above and less than 2 mm.

### Example 2

Flour of germinated barley having different crush degrees was manufactured by using a germinated barley seed (only soaked) of cv.Harrington which is a kind of barley series. The germinated barley seed used for crushing was manufactured by performing the dry process for 29 hours after the soaking process of 27 hours. The same as example 1, first of all, the germinated barley seed were powdered roughly with a crusher, then only fractions having a diameter between 1 mm and 2 mm were collected, further the obtained fractions were powdered again using a cyclone mill. Powders of the germinated barley (less than 75 *µ*m, 75 *µ*m or above and less than 150 *µ*m, 150 *µ*m or above and less than 300 *µ*m, 300 *µ*m or above and less than 600 *µ*m, 600 *µ*m or above and less than 1 mm, 1 mm or above and less than 2 mm) were manufactured by the filtering process, and each fraction was mixed with materials for breads.

Breads were manufactured by using a loaf bread course of the Home Bakery (TWINBIRD) and materials were mixed in amount as recommended by the Home Bakery, but breads were manufactured by mixing each fraction of powder of germinated barley to enriched flour with 20% and 40% of a mixed ratio, respectively.

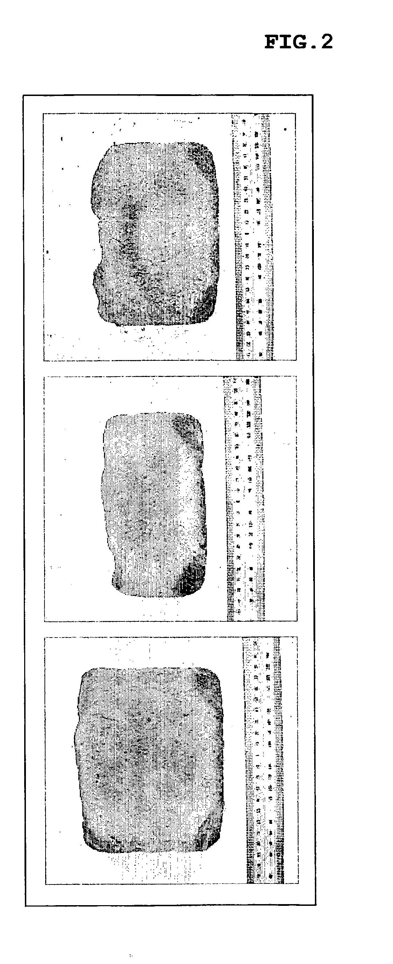

As a result, when the crush degree of the flour of germinated barley is less than 75 *µ*m, the swelling rate was a maximum for any mixed part (see Table 2 and Fig.2). Also, there is some different tendency between 20% of the mixed ratio and 40% of the mixed ratio; it is recognized that the swelling rate is low at the time of 20% mixing and the swelling rate is high at the time of 40% mixing for part of flour of the germinated barley of 600 µm or above and less than 1 mm.

Table 2 shows the evaluation of swelling rates for each fraction at the time of 20% mixing and 40% mixing (cv.Harrington, flour of the germinated barley) .

**Table 2**

| | LESS THAN 75 µm | 75 µm-150 µm | 150 µm-300 µm | 300 µm-600 µm | 600 µm-1mm | 1mm-2mm |
|---|---|---|---|---|---|---|
| 20% MIXED RATIO | 3 | 2 | 1 | 2 | 1 | 1 |
| 40% MIXED RATIO | 5 | 4 | 1 | 3 | 4 | 2 |

The swelling rate of breads is evaluated as 3 grades at the time of 20% mixing and 5 grades at the time of 40% mixing, and the swelling rate is high as its value is increased.

Fig. 2 is a figure of breads which are mixed with 40% fraction for each of the germinated barley seed (cv.Harrington) which was performed by the soaking process. In Fig. 2, it shows mixed parts of the germinated barley; the left one is less than 75 *µ*m, the middle one is 150 *µ*m or above and less than 300 *µ*m, and the right one is 600 *µ*m or above and less than 1 mm.

### Example 3

Flour of the germinated barley having different crush degrees was manufactured by using germinated barley seed (6 germination days) of cv.Ichibanboshi. The germinated barley seed used for crushing were manufactured by performing the dry process for 29 hours after the soaking process of 48 hours and the germination process for 6 days. First of all, the germinated barley seed were powdered roughly with a crusher, then only fractions having a diameter between 1 mm and 2 mm were collected; further the obtained fractions were powdered again using a cyclone mill. Powders of germinated barley (less than 300 µm, 300 µm or above and less than 600 µm, 1 mm or above and less than 2 mm) were manufactured, and each fraction was mixed with materials for breads by 20% of a mixed ratio.

A general method was used for manufacturing breads. The fermentation temperature was 40 °C and breads shaped like mountains were manufactured by a microwave oven.

As a result, the swelling rate was increased as the crush degree of flours of the germinated barley was roughly powdered. The swelling rate was the highest value for flours of the germinated barley (1 mm or above and less than 2 mm). Compared to flours of the germinated barley of example 2, a tendency of the crush degree and the swelling rate is different, but it is recognized that the different tendency is observed because flours of the germinated barley having 6 germination days have great enzymatic activity for each enzyme. Also, chromaticity of dough of breads is greatly different depending on the crush degree, and white color degree is increased as the flour is more roughly powdered.

Table 3 shows the evaluation of swelling rates for each fraction at the time of 20% mixing (cv.Ichibanboshi, flour of the germinated barley).

**Table 3**

| | LESS THAN 300 µm | 300 µm-60 µm | 1mm-2mm |
|---|---|---|---|
| 20% MIXED RATIO | 1 | 2 | 3 |

The swelling rate of breads is evaluated as 3 grades, and the swelling rate is high as its value is increased.

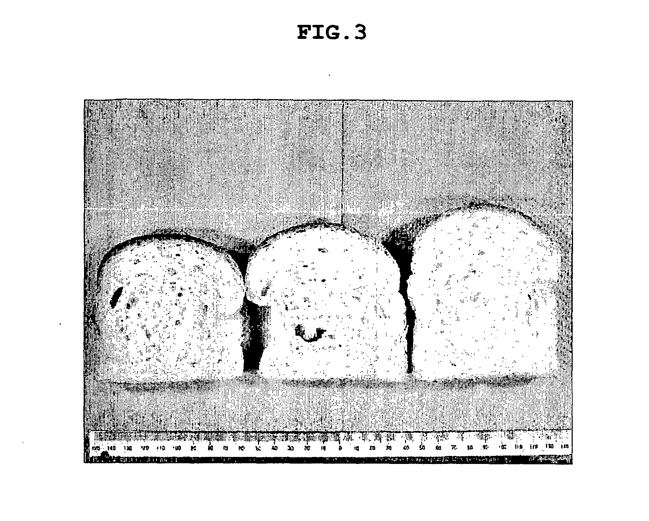

Fig. 3 is a figure of breads which are mixed with 40% fraction each of the germinated barley seed (cv.Ichibanboshi) which was performed by the germination process. In Fig. 3, it shows mixed ratio of the germinated barley; the left one is less than 300 *µ*m, the middle one is 300 *µ*m or above and less than 600 *µ*m, and the right one is 1 mm or above and less than 2 mm.

Therefore, it is clear from the above examples that a bread is provided having appropriate swelling characteristics, in which a crush degree of seeds of the cereal and processed seeds of the cereal is adjusted, then the seeds are blended into bread; and also a manufacturing method of the same is provided.

The present invention is not limited to the specifically disclosed embodiment, and variations and modifications may be made without departing from the scope of the present invention.

The present application is based on Japanese priority application No.2004-261415 filed on September 8, 2004, the entire contents of which are hereby incorporated by references.

## Claims

1. A method to regulate a swelling rate of bread by which materials obtained by adjusting a crush degree of a seed of a cereal are used for a part of the bread.

2. The method as claimed in claim 1,
wherein a barley seed is the material as the seed of the cereal.

3. A method to regulate a swelling rate of bread by which materials obtained by adjusting a crush degree of a processed seed of a cereal are used for a part of the bread.

4. The method as claimed in claim 3,
wherein the processed seed of the cereal is such that the seed of the cereal is soaked in water or hot water for a predetermined time.

5. The method as claimed in claim 3,
wherein the processed seed of the cereal is such that the seed of the cereal is soaked in water or hot water for a predetermined time, and after that, a germination process is performed depending on a germination day.

6. The method as claimed in claim 3,
wherein the processed seed of the cereal is such that the seed of the cereal is soaked in water or hot water for a predetermined time, and after that, a drying process is performed for a predetermined time.

7. A method to regulate a swelling rate of bread by which materials obtained by adjusting a crush degree of a processed seed of barley are used for a part of the bread.

8. The method as claimed in claim 7,
wherein the processed seed of barley is such that a barley seed is soaked in water or hot water for a predetermined time.

9. The method as claimed in claim 7,
wherein the processed seed of barley is such that the barley seed is soaked in water or hot water for a predetermined time, and after that, a germination process is performed.

10. The method as claimed in claim 7,
wherein the processed seed of barley is such that the barley seed is soaked in water or hot water for a predetermined time, and after that, a drying process is performed for a predetermined time.

11. A bread or breads using a seed of a cereal, a processed seed of the cereal or a processed seed of barley as a part of materials manufactured by the method as claimed in any one of claims 1-10.
